# EUROPÄISCHE PATENTSCHRIFT

(11) **EP 1 025 354 B1**
(45) Veröffentlichungstag und Bekanntmachung des Hinweises auf die Patenterteilung: **10.04.2002**
(21) Anmeldenummer: 98959751.3
(22) Anmeldetag: 22.10.1998
(51) Int. Cl.: F02G 1/044, F02G 1/055

(54) **VERFAHREN UND VORRICHTUNG ZUM BETREIBEN EINER NACH EINEM REGENERATIVEN GASKREISPROZESS ARBEITENDEN WÄRME- UND KÄLTEMASCHINE**
METHOD AND DEVICE FOR OPERATING A HEATING AND REFRIGERATING MACHINE WHICH FUNCTIONS ACCORDING TO A REGENERATIVE GAS CIRCULATION PROCESS
PROCEDE ET DISPOSITIF POUR FAIRE FONCTIONNER UNE MACHINE CALORIFIQUE OU FRIGORIFIQUE FONCTIONNANT SELON UN PROCESSUS DE CIRCULATION DE GAZ ET DE RECUPERATION

(30) Priorität: 23.10.1997 DE 19746838
(43) Veröffentlichungstag der Anmeldung: 09.08.2000
(73) Patentinhaber: ROBERT BOSCH GMBH, 70442 Stuttgart (DE); Viessmann Werke GmbH & Co, 35108 Allendorf (DE)
(72) Erfinder: HEIKRODT, Klaus, D-47829 Krefeld (DE)
(86) Internationale Anmeldenummer: DE9803100
(87) Internationale Veröffentlichungsnummer: WO9922132

(56) Entgegenhaltungen:
- EP-A- 0 457 399
- DE-A- 19 516 499
- FR-A- 2 049 990
- US-A- 3 456 438
- PATENT ABSTRACTS OF JAPAN vol. 012, no. 315 (M-735), 26. August 1988 & JP 63 088250 A (TOSHIBA CORP), 19. April 1988

## Beschreibung

### Stand der Technik

Die Erfindung geht aus von einem Verfahren zum Betreiben einer nach einem regenerativen Gaskreisprozeß arbeitenden Wärme- und Kältemaschine nach der Gattung des Hauptanspruchs, sowie von einer Wärme- und Kältemaschine zur Durchführung des Verfahrens.

Aus der DE 195 16 499 A1 ist ein Verfahren für eine gattungsgemäße Wärme- und Kältemaschine bekannt, bei der die für die thermische Antriebsquelle notwendige Verbrennungsluft durch die bei der Verbrennung entstehenden Abgase vorgewärmt wird. Die Verbrennungsluftvorwärmung erhöht den Wirkungsgrad des Brenners bzw. die Leistungszahl der Wärme- und Kältemaschine insgesamt; gleichzeitig ist die Wärme- und Kältemaschine so konzipiert, daß für eine bestimmte Baugröße nur eine bestimmte maximale Heizleistung bei einer optimalen Leistungszahl erzielt werden kann.

Zur Deckung eines höheren Heizwärmebedarfs ist es z.B. bekannt, neben dem Betrieb einer Wärmepumpe durch eine parallele bivalente Betriebsweise einen zweiten Wärmeerzeuger, z.B. eine konventionelle Gasheiztherme oder elektrische Heizstäbe einzusetzen.

### Vorteile der Erfindung

Das erfindungsgemäße Regelverfahren und die Vorrichtung zur Durchführung des Regelverfahrens haben den Vorteil, daß die für eine bestimmte Heizleistung ausgelegte Baugröße einer Wärme- und Kältemaschine beibehalten werden kann, während die Ausgangs- bzw. Gesamtleistung der Wärme- und Kältemaschine in vorteilhafter Weise weiter erhöht wird.

In den seltenen Fällen extrem niedriger Außentemperaturen und einem damit verbundenen höheren Heizenergiebedarf kann z.B. eine geforderte Ausgangsleistung von 20 KW durch eine auf 15 KW ausgelegte Wärmemaschine- und Kältemaschine zur Verfügung gestellt werden, indem teilweise oder ganz auf die Luftvorwärmung der Verbrennungsluft verzichtet wird, während die Brennerleistung erhöht und der heiße Abgasmassenstrom zur weiteren Heizenergieausnutzung einem Abgas-Wasserwärmeaustauscher zugeführt wird.

Die einer deutschen Norm (DIN 4702/8) zugrundeliegenden Daten zur Häufigkeitsverteilung der Außentemperatur und dem damit verbundenen Heizwärmebedarf zeigen, daß weniger als eine 80 %- ige Auslastung eines Wärmeerzeugers ausreicht, um 96 % der jährlich kumulierten Heizwärmeabgabe abzudecken. Für die restlichen fehlenden 4% Heizwärmebedarf kann das erfindungsgemäße Regelverfahren in Form einer integrierten Bivalenz Anwendung finden.

Durch die in den Unteransprüchen aufgeführten Maßnahmen sind vorteilhafte Weiterbildungen für das Verfahren sowie für die Vorrichtung zum Betreiben einer nach einem regenerativen Gaskreisprozeß arbeitenden Wärme- und Kältemaschine möglich.

Die Vorwärmung der Verbrennungsluft wird in vorteilhafter Weise über einen den Abgaswärmeaustauscher umgehenden Bypasskanal geregelt.

Um eine kontinuierliche Regelung der Verbrennungsluftvorwärmung in Abhängigkeit von der geforderten Heizleistung zu erzielen, wird vorgeschlagen, den Bypasskanal über eine Bypassklappe zu steuern.

Die Erhöhung der Brennerleistung erfolgt in vorteilhafter Weise dadurch, daß der über ein Gebläse geförderte Verbrennungsluftstrom und die Brenngasmenge unterBeibehaltung der Luftzahl erhöht werden.

### Zeichnung

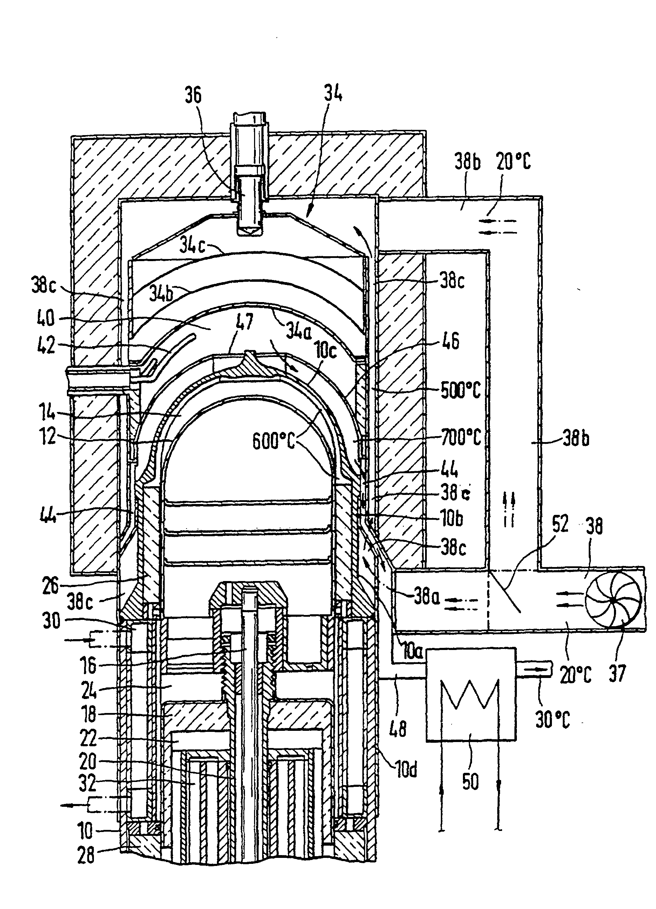

Ein Ausführungsbeispiel ist in der Zeichnung dargestellt und in der nachfolgenden Beschreibung näher erläutert. Die einzige Figur zeigt einen schematischen Längsschnitt einer nach dem erfindungsgemäßen Verfahren arbeitenden Wärme- und Kältemaschine.

### Beschreibung des Ausführungsbeispiels

Auf der Zeichnung ist der obere Teil eines Druckbehälters 10 einer Vuilleumier- Wärmepumpe gezeigt, in dessen unterem, auf der Zeichnung nicht dargestellten Teil sich ein Getriebe befindet. Im oberen Teil des Druckbehälters 10 ist ein heißer Kolben 12 angeordnet, der ein heißes Arbeitsvolumen 14 begrenzt. Der heiße Kolben 12 steht über eine Kolbenstange 16 mit dem auf der Zeichnung nicht dargestellten Getriebe in Verbindung. Die Kolbenstange 16 durchdringt einen kalten Kolben 18, der mittels einer hohlen, die Kolbenstange 16 umgebenden Kolbenstange 20 ebenfalls mit dem Getriebe verbunden ist. Im Inneren des topfförmig ausgebildeten kalten Kolbens 18 wird ein kaltes Arbeitsvolumen 22 gebildet. Zwischen dem heißen Kolben 12 und dem kalten Kolben 18 bildet sich ein warmes Arbeitsvolumen 24 aus.

Die drei Arbeitsvolumina 14, 22, 24 sind unter Zwischenschaltung von Regeneratoren 26 und 28 sowie Wärmeaustauschern 30 und 32 miteinander verbunden. Während sowohl der heiße Regenerator 26 als auch der kalte Regenerator 28 und der warme Wärmeaustauscher 30 unmittelbar an der Innenseite des Druckbehälters 10 angeordnet sind, befindet sich der kalte Wärmeaustauscher 32 in einem feststehenden, von den Kolbenstangen 16 und 20 durchdrungenen Teil innerhalb des kalten Kolbens 18.

Die in Reihe mit den Wärmeaustauschern 30 und 32 geschalteten Regeneratoren 26 und 28 sind ringförmig ausgeführt und werden in axialer Richtung von dem unter hohen Druck stehenden Prozeßgas durchströmt. Dieses Prozeßgas beaufschlagt auch eine Seite der Wärmeaustauscher 30 und 32, die auf ihrer anderen Seite an einen nicht dargestellten Heizkreislauf angeschlossen sind.

Die Wärmezufuhr zum heißen Arbeitsvolumen 14 erfolgt durch einen mit Brenngas betriebenen Strahlungsbrenner 34, der aus einer nach innen gewölbten Brenneroberfläche 34a und zwei Brenngasverteilern 34b und 34c besteht, die für eine gleichmäßige Verteilung des Brenngas-Luft-Gemisches zur Brenneroberfläche 34a sorgen. Das für die Verbrennung notwendige Brenngas wird über eine Brennerdüse 36 und die Verbrennungsluft mittels eines Gebläses 37 über einen Verbrennungsluftkanal 38 zugeführt. In einer Brennkammer 40 wird mit Hilfe einer Zündelektrode 42 das Brenngas-Luftgemisch an der Brenneroberfläche 34a gezündet, wo es unter Freisetzung von Wärme reagiert.

Die Funktionsweise einer Vuilleumier- Wärmepumpe ist bekannt, so daß auf die thermodynamischen Abläufe im Einzelnen nicht näher eingegangen wird.

Stromabwärts unterteilt sich der Verbrennungsluftkanal 38 in einen Bypasskanal 38b, der direkt zum Brenner 34 führt, während der Abschnitt 38a des Verbrennungsluftkanals in einen ringförmigen um die Druckbehälterwand 10 geführten Abschnitt 38c mündet, dessen radial innenliegende Wand durch einen Teil der Druckbehälterwand 10 gebildet wird, der auf der Zeichnung mit der Bezugsziffer 10a gekennzeichnet ist. Der Abschnitt 38c des Verbrennungsluftkanals führt ebenfalls zum Brenner 34, wobei er im Bereich des Druckbehälterwandteils 10b von diesem durch einen ringförmigen Abgaskanal 44 getrennt ist. Zwischen der Brenneroberfläche 34a und einem gewölbten Abschnitt 10c der Druckbehälterwand, im folgenden als Erhitzerkopf bezeichnet, befindet sich ein Leitblech 46 für die Abgase, die über eine im Leitblech 46 angeordnete zentrale Öffnung 47 zwangsweise an der Außenfläche des Erhitzerkopfes 10c entlanggeführt werden. Der zwischen Leitblech 46 und Erhitzerkopf 10c gebildete Kanal geht seitlich in den Abgaskanal 44 über. Der im Bereich des Druckbehälterwandteils 10b unmittelbar an der Druckbehälterwand anliegende Abgaskanal 44 wird beim Übergang zum Druckbehälterwandteil 10a von der Druckbehälterwand weggeführt und geht anschließend in einen Kanalabschnitt 48 über, der in einen Abgas-Heizwasserwärmeaustauscher 50 führt. Im Bereich des Druckbehälterwandteils 10b findet ein Wärmeaustausch zwischen den Abgasen im Abgaskanal 44 und der Verbrennungsluft im Abschnitt 38c des Verbrennungsluftkanals statt.

Im Verbrennungsluftkanal 38 ist eine den Verbrennungsluftstrom steuernde Bypassklappe 52 angeordnet, die in Abhängigkeit vom momentan geforderten Heizwärmebedarf bzw. vom Lastzustand der Wärmepumpe gesteuert wird.

Arbeitet die Wärmepumpe aufgrund einer niedrigen Heizwärmeanforderung im Teillastbetrieb, so nimmt die Bypassklappe 52 die in der Abbildung strichpunktliniert dargestellte Lage ein, so daß der Bypasskanal 38b vollständig geschlossen ist und die gesamte Verbrennungsluft über den Abschnitt 38a des Verbrennungsluftkanals dem Brenner 34 zugeführt wird. Der mit etwa 20° C vom Gebläse 37 in den Verbrennungsluftkanal 38 geförderte Verbrennungsluftstrom wird im ringförmig ausgebildeten Abschnitt 38c des Verbrennungsluftkanals u.a. durch den Wärmeaustausch mit den Abgasen so weit vorgewärmt, daß die Verbrennungsluft beim Eintritt zum Brenner 34 Temperaturen von bis zu 500° C aufweist.

Die durch den Wärmeaustausch mit dem Prozeßgas auf etwa 700° C abgekühlten Abgase verlassen die Brennkammer 40-über die im Leitblech 46 angeordnete zentrale Öffnung 47 und werden im Bereich des Abgaskanals 44 durch die Verbrennungsluft auf etwa 200° C weiter abgekühlt. Die mit dieser Temperatur über den Kanalabschnitt 48 in den Abgas-Heizwasser-Wärmeaustauscher 50 eintretenden Abgase werden bis auf eine Temperatur von ca. 30° C heruntergekühlt, wobei durch die Taupunktunterschreitung auch die Kondensationsenthalpie des in den Abgasen enthaltenen Wasserdampfes ausgenutzt wird. Der über den Abgas-Heizwasser-Wärmeaustauscher 50 entnommene Heizwärmestrom geht dabei neben den durch die Wärmepumpe selbst erzeugten Heizwärmestrom mit in die Gesamtleistungsbilanz der Anlage ein.

Die Leistung der Wärmepumpe ist über die Erhitzerkopftemperatur und damit über die Brennerleistung regelbar. Wird die Brennerleistung verändert, so ändert sich die Erhitzerkopftemperatur und damit auch die Temperatur des Prozeßgases, womit sich letztendlich auch die über die Wärmeaustauscher 30, 32 und 50 ausgetauschten Wärmeströme ändern.

Eine Erhöhung der Heizleistung mit der oben beschriebenen Vorwärmung der Verbrennungsluft ist jedoch nur innerhalb bestimmter Bereiche möglich, da bei einer weiteren Erhöhung des Antriebswärmestroms über den Brenner 34 die Verbrennungstemperaturen Werte annehmen, die zu einem starken thermischen NOx- Anstieg führen; darüberhinaus würden insbesondere an die Temperaturbeständigkeit des Erhitzerkopf- Werkstoffes technisch unrealistische Anforderungen gestellt werden.

Hier findet das erfindungsgemäße Regelverfahren seine Anwendung, indem bei zunehmendem Heizwärmebedarf teilweise oder ganz auf die Luftvorwärmung der Verbrennungsluft durch den Abgaswärmeaustausch verzichtet wird, während die Brennerleistung erhöht und der heißere, ungekühlte Abgasmassenstrom dem Abgas- Heizwasser-Wärmeaustauscher 50 zugeführt wird. Die Vorwärmung der Verbrennungsluft wird dabei über die Bypassklappe 52 teilweise oder ganz unterbunden, indem bei höheren Heizwärmeanforderungen zumindest teilweise über die Bypassklappe 52 der Bypasskanal 38b freigegeben wird, so daß ein nicht- oder nur teilweise vorgewärmter Verbrennungsluftstrom dem Brenner 34 zugeführt wird.

Im Extremfall, d.h. bei Vollastbetrieb der Wärmepumpe würde die Bypassklappe 52 die in der Zeichnung strichliniert dargestellte Lage einnehmen, wodurch der gesamte Verbrennungsluftstrom dem Brenner 34 über den Bypasskanal 38b zugeführt wird. Damit würde sich die von der Wärmepumpe über die Wärmeaustauscher 30, 32 abgegebenen bzw. aufgenommenen Wärmeströme reduzieren, da bei geringeren Erhitzerkopftemperaturen das im Druckbehälter 10 befindliche Prozeßgas weniger stark erhitzt wird. Dieser Leistungsverlust wird dadurch kompensiert, daß die Brennerleistung über die Gebläsedrehzahl soweit erhöht wird, daß der Erhitzerkopf die gleichen Temperaturwerte annimmt, wie bei einer optimalen Betriebsweise mit vollständiger Luftvorwärmung. Ein pneumatischer Brenngas-Verbrennungsluft- Verhältnisregler steuert dabei die Gaszufuhr entsprechend der geförderten Verbrennungsluftmenge, so daß die Luftzahl im gesamten Leistungsbereich des Brenners 34 konstant bleibt.

Durch die Erhöhung der Brennerleistung bleiben die aufgenommenen bzw. abgegebenen Wärmeströme über die Wärmeaustauscher 30 und 32 der Wärmepumpe konstant, gleichzeitig wird jedoch ein größerer, nicht oder nur teilweise durch die Verbrennungsluft abgekühlter Abgasmassenstrom dem Abgas-Heizwasser-Wärmeaustauscher 50 zugeführt , so daß eine bis zu ca. 20 % größere Wärmemenge über den Abgas-Heizwasser-Wärmeaustauscher 50 in den Heizwasserkreislauf eingebunden werden kann. Zwar verschlechtert sich bei dieser Betriebsweise der Wirkungsgrad bzw. die Leistungszahl der Wärmepumpe geringfügig, der große Vorteil liegt jedoch in der besseren Anpassung der Bau- bzw. Leistungsgröße der Wärmepumpe hinsichtlich dem über das Jahr anfallenden Heizwärmebedarf.

Das beschriebene Regelverfahren zur Erhöhung der Ausgangsleistung einer Wärmemaschine- und Kältemaschine ist nicht auf die Anwendung für eine Vuilleumier- Wärmepumpe eingeschränkt, sondern auch bei anderen thermisch betriebenen Maschinen, wie z.B. bei einer Stirling- Maschine einsetzbar.

## Patentansprüche

1. Verfahren zum Betreiben einer nach einem regenerativen Gaskreisprozeß arbeitenden Wärme- und Kältemaschine, insbesondere einer Vuilleumier-Wärmepumpe, mit einem Brenner als thermische Antriebsquelle, bei dem zur Erhöhung seines Wirkungsgrads bzw. zur Maximierung der Leistungszahl der Wärme- und Kältemaschine die dem Brenner zugeführte Verbrennungsluft im Wärmeaustausch mit den Abgasen vorgewärmt wird, **dadurch gekennzeichnet, daß** zur Erhöhung der Ausgangsleistung der Wärme- und Kältemaschine die Vorwärmung der Verbrennungsluft zumindest teilweise unterbunden wird, während bei gleichzeitiger Erhöhung der Brennerleistung der heiße Abgasmassenstrom einem Abgas-Wasserwärmeaustauscher (50) zugeführt wird.

2. Verfahren nach Anspruch 1, **dadurch gekennzeichnet, daß** die Vorwärmung der Verbrennungsluft über einen den Abgaswärmeaustauscher umgehenden Bypasskanal (38b) geregelt wird.

3. Verfahren nach Anspruch 2, **dadurch gekennzeichnet, daß** die über den Bypasskanal (38b) geführte Verbrennungsluft über eine Bypassklappe (52) geregelt wird.

4. Verfahren nach einem der vorhergehenden Ansprüche, **dadurch gekennzeichnet, daß** zur Erhöhung der Brennerleistung der über ein Gebläse (37) geförderte Verbrennungsluftstrom und die Brenngasmenge unter Beibehaltung der Luftzahl erhöht werden.

5. Vorrichtung zur Durchführung des Verfahrens nach einem der vorhergehenden Ansprüche, **dadurch gekennzeichnet, daß** ein Bypasskanal (38b) vorgesehen ist, mit deren Hilfe die Vorwärmung der Verbrennungsluft steuerbar ist und daß ein Abgas-Wasser-Wärmeaustauscher (50) vorgesehen ist, der mit dem Brenner (34) über eine Abgasabführung (44) in Verbindung steht.

6. Vorrichtung nach Anspruch 5, **dadurch gekennzeichnet, daß** die Öffnung des Bypasskanals (38b) über eine im Verbrennungsluftkanal (38) angeordnete Bypassklappe (52) regelbar ist.

## Claims

1. Method for operating a heat and cold machine working according to a regenerative gas cyclic process, in particular a Vuilleumier heat pump, with a burner as a thermal drive source, in which, in order to increase its efficiency or to maximize the performance number of the heat and cold machine, the combustion air supplied to the burner is preheated in heat exchange with the exhaust gases, **characterized in that**, in order to increase the initial performance of the heat and cold machine, the preheating of the combustion air is at least partially prevented, whilst, with a simultaneous increase in the burner performance, the hot exhaust-gas mass flow is supplied to an exhaust-gas water heat exchanger (50).

2. Method according to Claim 1, **characterized in that** the preheating of the combustion air is regulated via a bypass duct (38b) bypassing the exhaust-gas heat exchanger.

3. Method according to Claim 2, **characterized in that** the combustion air guided via the bypass duct (38b) is regulated via a bypass flap (52).

4. Method according to one of the preceding claims, **characterized in that**, in order to increase the burner performance, the combustion-air flow conveyed via a blower (37) and the fuel-gas quantity are increased while the air ratio is maintained.

5. Device for carrying out the method according to one of the preceding claims, **characterized in that** a bypass duct (38b) is provided, with the aid of which the preheating of the combustion air can be controlled, and **in that** an exhaust-gas water heat exchanger (50) is provided, which is connected to the burner (34) via an exhaust-gas discharge (44).

6. Device according to Claim 5, **characterized in that** the opening of the bypass duct (38b) can be regulated via a bypass flap (52) arranged in the combustion-air duct (38).

## Revendications

1. Procédé de mise en oeuvre d'une machine thermique fonctionnant selon un procédé de circuit de gaz à régénération, notamment d'une pompe à chaleur Vuilleumier, comprenant un brûleur comme source d'entraînement thermique, qui, pour augmenter le rendement ou prendre au maximum le coefficient de puissance de la machine thermique, préchauffe l'air comburant fourni au brûleur dans un échangeur de chaleur en utilisant des gaz d'échappement,
**caractérisé en ce que**
pour augmenter la puissance fournie par la machine thermique, on coupe au moins partiellement le préchauffage de l'air comburant, pendant une augmentation simultanée de la puissance du brûleur, dont le flux massique des gaz d'échappement chauds est fourni à un échangeur de chaleur gaz d'échappement/eau 50.

2. Procédé selon la revendication 1,
**caractérisé en ce qu'**
on règle le préchauffage de l'air comburant par un canal de dérivation (38b) qui contourne l'échangeur de chaleur des gaz d'échappement.

3. Procédé selon la revendication 2,
**caractérisé en ce que**
l'air comburant passant par le canal de dérivation (38b) est régulé par un volet de dérivation (52).

4. Procédé selon l'une quelconque des revendications précédentes,
**caractérisé en ce que**
pour augmenter la puissance du brûleur on augmente le débit d'air comburant fourni par un ventilateur (37) et la quantité de gaz de combustion tout en conservant le coefficient d'air.

5. Dispositif pour la mise en oeuvre du procédé selon l'une quelconque des revendications précédentes,
**caractérisé par**
un canal de dérivation (38b) à l'aide duquel on commande le préchauffage de l'air comburant et
un échangeur de chaleur gaz d'échappement/eau (50) relié au brûleur (34) par une conduite de gaz d'échappement (44).

6. Dispositif selon la revendication 5,
**caractérisé en ce que**
l'ouverture du canal de dérivation (38b) est réglée par un volet de dérivation (52) installé dans le canal d'air comburant (38).
